(19) Europäisches Patentamt
European Patent Office
Office européen des brevets

(11) Veröffentlichungsnummer: **0 040 330**
**B1**

(12) **EUROPÄISCHE PATENTSCHRIFT**

(45) Veröffentlichungstag der Patentschrift: **30.01.85**

(51) Int. Cl.$^4$: **C 08 F 10/00**, C 08 F 4/64

(21) Anmeldenummer: **81103001.4**

(22) Anmeldetag: **18.04.81**

(54) **Verfahren zum Herstellen von Homo- und Copolymerisaten von alpha-Monoolefinen mittels eines Ziegler-Natta-Katalysatorsystems.**

(30) Priorität: **12.05.80 DE 3018113**

(43) Veröffentlichungstag der Anmeldung: **25.11.81 Patentblatt 81/47**

(45) Bekanntmachung des Hinweises auf die Patenterteilung: **30.01.85 Patentblatt 85/05**

(84) Benannte Vertragsstaaten: **AT BE DE FR GB IT**

(56) Entgegenhaltungen:
**EP-A-0 009 724**
**DE-A-1 570 919**
**DE-A-2 658 939**
**DE-A-2 730 965**
**DE-A-2 841 645**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft**
**Carl-Bosch-Strasse 38**
**D-6700 Ludwigshafen (DE)**

(72) Erfinder: **Jaggard, James F. R., Dr.**
**Bruesseler Ring 45**
**D-6700 Ludwigshafen (DE)**
Erfinder: **Klaerner, Peter, Dr.**
**Hauptstrasse 62**
**D-6719 Battenberg (DE)**
Erfinder: **Schweier, Guenther, Dr.**
**Friedrich-Pietzsch-Strasse 14**
**D-6701 Friedelsheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 040 330 B1

**Beschreibung**

Die vorliegende Erfindung basiert auf einem Verfahren zum Herstellen von Homo- und Copolymerisaten von $C_2$- bis $C_6$-$\alpha$-Monoolefinen bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer Titan-III-Komponente bei deren Herstellung man

(1.1) eine Titan enthaltende Verbindung (a) der Formel

$$TiCl_3 \cdot nAlCl_3,$$

worin n für eine Zahl im Bereich von 0,01 bis 1, insbesondere von 0,1 bis 0,4 steht, und

(1.2) einen Ester (b), der insgesamt 2 bis 34, insbesondere 2 bis 18 Kohlenstoffatome enthält und die Formel

$$R^1{-}O{-}CO{-}R^2$$

oder

$$R^1{-}O{-}CO{-}\underset{R^2}{CH}{=}\underset{R^2}{CH}$$

hat, worin stehen

$R^1$ für (I) eine 1 bis 16, insbesondere 1 bis 8 Kohlenstoffatome aufweisende Alkylgruppe oder (II) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können,

$R^2$ für (I) Wasserstoff (II) eine 1 bis 18 insbesondere 2 bis 12 Kohlenstoffatome aufweisende Alkylgruppe, (III) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können, (IV) eine Phenylgruppe oder (V) eine insgesamt 7 bis 23, insbesondere 7 bis 14 Kohlenstoffatome aufweisende Alkylphenylgruppe, wobei bis zu 5 Wasserstoffatome des Phenylrests durch 1 bis 4 Kohlenstoffatome aufweisende Alkylgruppen substituiert sein können,

einer Mahlbehandlung unterzieht, derart, daß man

(A) als Arbeitsgerät eine Kugelschwingmühle wählt,

(B) die Mühle zunächst mit der Titan enthaltenden Verbindung (a) beschickt und—gegebenenfalls—bei einer Temperatur von −50 bis +100, insbesondere −30 bis +50°C über eine Zeitspanne von 0,5 bis 100, insbesondere 2 bis 20 Stunden in Abwesenheit von Verdünnungsmitteln betreibt, dann

(C) unter Mahlen bei einer Temperatur des Mahlgutes von −50 bis +80, insbesondere von −30 bis +60°C die einem Molverhältnis Titan in der Titan enthaltenden Verbindung (a): Ester (b) von 1:1,5 bis 1:0,01, insbesondere von 1:0,7 bis 1:0,1 entsprechende Menge des Esters (b) mit einer Geschwindigkeit von 0,01 bis 200, insbesondere von 1 bis 80 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 120, insbesondere von 20 bis 70 Stunden auf einer Temperatur von +15 bis +100, insbesondere von +20 bis +60°C hält, hierauf

(E)—gegebenenfalls—das gemäß (D) erhaltene Produkt über eine Zeitspanne von 0,5 bis 60, insbesondere von 2 bis 30 Minuten bei einer Temperatur von −50 bis +5, insbesondere von −40 bis 0°C in Abwesenheit von Verdünnungsmitteln weitervermahlt, sodann

(F)—gegebenenfalls und vorteilhafterweise—das gemäß (D) oder (E) erhaltene Produkt ohne es zu mahlen über eine Zeitspanne von 0,25 bis 300, insbesondere 2 bis 150 Std. auf einer Temperatur von +20 bis +150, insbesondere +45 bis +100°C hält, und danach

(G)—gegebenenfalls—das gemäß (F) erhaltene Produkt über eine Zeitspanne von 0,5 bis 60, insbesondere 2 bis 30 Minuten bei einer Temperatur von −50 bis +5, insbesondere von −40 bis 0°C in Abwesenheit von Verdünnungsmitteln nachvermahlt, mit der Maßgabe, daß bei jedem Mahlvorgang eine Mahlbeschleunigung von 30 bis 80, insbesondere von 45 bis 55 m. $sec^{-2}$ gegeben ist,

(2) einer Aluminiumalkyl-Komponente der Formel

$$R^3{-}\underset{Cl}{Al}{-}R^4$$

worin $R^3$ und $R^4$ gleich oder verschieden sind und stehen für eine 1 bis 8, insbesondere 2 bis 4 Kohlenstoffatomen aufweisende Alkylgruppe, sowie

(3)—gegebenenfalls und vorteilhafterweise—einem phenolischen Stoff der Formel

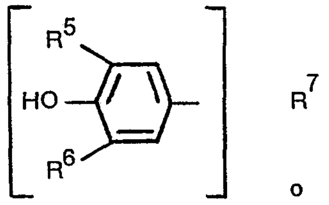

oder

(I)

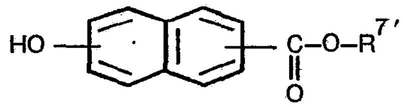

(II)

worin stehen

$R^5$ für eine $C_1$- bis $C_6$-, insbesondere $C_3$- bis $C_4$-Alkylgruppe,
$R^6$ für Wasserstoff oder eine $C_1$- bis $C_6$-, insbesondere $C_3$- bis $C_4$-Alkylgruppe,
$R^7$ für Wasserstoff oder einen nicht mehr als 30, insbesondere nicht mehr als 24 Kohlenstoffatome sowie—gegebenenfalls—bis zu insgesamt 6, insbesondere bis zu insgesamt 4 Äthergruppen und/oder Estergruppen aufweisenden gesättigten Kohlenwasserstoffrest,
$R^{7'}$ für eine $C_2$- bis $C_{24}$-, insbesondere $C_4$- bis $C_{18}$-Alkylgruppe, und
o für eine ganze Zahl von 1 bis 6, insbesondere 1 bis 4,

mit den Maßgaben, daß das Atomverhältnis Titan aus der Titan-III-Komponente (1): Aluminium aus der Aluminium-alkyl-Komponente (2) im Bereich von 1:1 bis 1:20, insbesondere 1:2 bis 1:15 liegt und, daß—im gegebenen Fall—das Molverhältnis Aluminiumalkyl-Komponente (2): phenolischer Stoff (3) 1:1 bis 40:1, insbesondere 3:1 bis 25:1 beträgt.

Verfahren dieser Art sind bekannt; ihre Besonderheit gegenüber vergleichbaren anderen Verfahren liegt in der speziellen Ausgestaltung des Katalysatorsystems, wobei als Prototypen für den vorliegenden Fall die aus den DE—A—26 58 939 (=US—A—4,154,699) und 28 41 645 bekannten Verfahren genannt werden können.

Die speziellen Ausgestaltungen des Katalysatorsystems werden vorgenommen, um bestimmte Ziele zu erreichen, z.B. die folgenden:

(a) Katalysatorsysteme, die bei der Polymerisation von $\alpha$-Monoolefinen, wie insbesondere Propylen, zu Polymerisaten mit einem hohen Anteil an stereoregulärem (=isotaktischem) Polymerisat führen.

(b) Katalysatorsysteme, die eine erhöhte Ausbeute an Polymerisat zu liefern vermögen nämlich Systeme mit einer erhöhten Produktivität, d.h. Systeme, bei denen die Menge an gebildetem Polymerisat pro Gewichtseinheit des Katalysatorsystems erhöht ist.

(c) Katalysatorsysteme, durch die weniger Halogen in das Polymerisat eingebracht werden;—was zu erreichen ist, indem die Ausbeute gemäß (b) gesteigert wird und/oder ein Titanhalogenid eingesetzt wird, das möglichst wenig Halogen erhält.

(d) Katalysatorsysteme, deren Aktivitätsmaximum über eine möglichst lange Zeit konstant bzw. relativ konstant bleibt;—was für die Katalysatorausbeuten von erheblicher Bedeutung ist.

(e) Katalysatorsysteme, die es erlauben, durch Erhöhung der Polymerisationstemperatur eine Umsatzsteigerung zu bewirken ohne signifikante Minderung der Stereoregularität der Polymerisate;—ein Effekt, der generell erwünscht ist, insbesondere auch bei der Trokkenphasenpolymerisation.

(f) Katalysatorsysteme, durch welche—insbesondere bei relativ hohen Polymerisationstemperaturen—die morphologischen Eigenschaften der Polymerisate in bestimmter Weise beeinflußt werden, etwa im Sinne einer einheitlichen Korngröße und/oder einer Verringerung der Feinstkornanteile und/oder eines hohen Schüttgewichtes;—was z.B. für die technische Beherrschung der Polymerisationssysteme, die Aufarbeitung der Polymerisate und/oder die Verarbeitbarkeit der Polymerisate von Bedeutung sein kann.

(g) Katalysatorsysteme, die einfach und sicher herzustellen und gut handzuhaben sind;—z.B. solche, die sich in (inerten) Kohlenwasserstoff-Hilfsmedien zubereiten lassen.

(h) Katalysatorsysteme, die es ermöglichen, bei der Polymerisation unter Einwirkung eines Molekulargewichtsreglers, wie insbesondere Wasserstoff, mit relativ geringen Mengen an Regler auszukommen;—was z.B. für die Thermodynamik der Verfahrensführung von Bedeutung sein kann.

(i) Katalysatorsysteme, die auf spezielle Polymerisationsverfahren zugeschnitten sind;—etwa solche, die z.B. entweder auf die spezifischen Besonderheiten der Suspensionspolymerisation oder auf die spezifischen Besonderheiten der Trockenphasenpolymerisation abgestimmt sind.

(j) Katalysatorsysteme, die zu Polymerisaten führen, deren Eigenschaftsspektrum sie für das eine oder das andere Anwendungsgebiet besonders geeignet macht.

Nach den bisherigen Erfahrungen gibt es unter den mannigfachen Zielen etliche Ziele, die man durch spezielle Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen liegt die Aufgabenstellung der vorliegenden Erfindung: Eine neue Ausgestaltung eines Katalysatorsystems aufzuzeigen, mit der man gegenüber bekannten Ausgestaltungen bei relativ höheren Temperaturen—mit entsprechend relativ hohen Ausbeuten an Polymerisat—Polymerisate mit einer relativ höheren Stereoregularität (=Isotaktizität) und zusätzlich, insbesondere auch günstigen morphologischen Eigenschaften—wie geringen Feinstkornanteil—erhalten kann.

Es wurde gefunden, daß die gestellte Aufgabe gelöst werden kann mit einem Katalysatorsystem der eingangs definierten Art, dessen Titan-III-Komponente (1) nach der Mahlbehandlung einer zusätzlichen speziellen chemischen Behandlung unterworfen wird.

Gegenstand der vorliegenden Erfindung ist mithin ein Verfahren zum Herstellen von Homo- und Copolymerisaten von $C_2$- bis $C_6$-$\alpha$-Monoolefinen bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer Titan-III-Komponente, bei deren Herstellung man

(1.1) eine Titan enthaltende Verbindung (a) der Formel

$$TiCl_3 \cdot nAlCl_3,$$

worin n für eine Zahl im Bereich von 0,01 bis 1, insbesondere von 0,1 bis 0,4 steht, und

(1.2) einen Ester (b), der insgesamt 2 bis 34, insbesondere 2 bis 18 Kohlenstoffatome enthält und die Formel

$$R^1—O—CO—R^2$$

oder

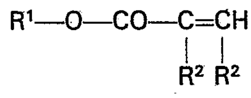

hat, worin stehen

$R^1$ für (I) eine 1 bis 16, insbesondere 1 bis 8 Kohlenstoffatome aufweisenden Alkylgruppe oder (II) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können,

$R^2$ für (I) Wasserstoff, (II) eine 1 bis 18, insbesondere 2 bis 12 Kohlenstoffatome aufweisende Alkylgruppe, (III) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können, (IV) eine Phenylgruppe oder (V) eine insgesamt 7 bis 23, insbesondere 7 bis 14 Kohlenstoffatome aufweisende Alkylphenylgruppe, wobei bis zu 5 Wasserstoffatome des Phenylrests durch 1 bis 4 Kohlenstoffatome aufweisende Alkylgruppen substituiert sein können,

einer Mahlbehandlung unterzieht, derart, daß man

(A) als Arbeitsgerät eine Kugelschwingmühle wählt,

(B) die Mühle zunächst mit der Titan enthaltenden Verbindung (a) beschickt und—gegebenenfalls—bei einer Temperatur von −50 bis +100, insbesondere −30 bis +50°C über eine Zeitspanne von 0,5 bis 100, insbesondere 2 bis 20 Stunden in Abwesenheit von Verdünnungsmitteln betreibt, dann

(C) unter Mahlen bei einer Temperatur des Mahlgutes von −50 bis +80, insbesondere von −30 bis +60°C die einem Molverhältnis Titan in der Titan enthaltenden Verbindung (a): Ester (b) von 1:1,5 bis 1:0,01, insbesondere von 1:0,7 bis 1:0,1 entsprechende Menge des Esters (b) mit einer Geschwindigkeit von 0,01 bis 200, insbesondere von 1 bis 80 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 120, insbesondere von 20 bis 70 Stunden auf einer Temperatur von +15 bis +100, insbesondere von +20 bis +60°C hält, hierauf

(E)—gegebenenfalls—das gemäß (D) erhaltene Produkt über eine Zeitspanne von 0,5 bis 60, insbesondere von 2 bis 30 Minuten bei einer Temperatur von −50 bis +5, insbesondere von −40 bis 0°C in Abwesenheit von Verdünnungsmitteln weitervermahlt, sodann

(F)—gegebenenfalls und vorteilhafterweise—das gemäß (D) oder (E) erhaltene Produkt ohne es zu mahlen über eine Zeitspanne von 0,25 bis 300, insbesondere 2 bis 150 Std. auf einer Temperatur von +20 bis +150, insbesondere +45 bis +100°C hält, und danach

(G)—gegebenenfalls—das gemäß (F) erhaltene Produkt über eine Zeitspanne von 0,5 bis 60, insbesondere 2 bis 30 Minuten bei einer Temperatur von −50 bis +5, insbesondere von −40 bis 0°C in Abwesenheit von Verdünnungsmitteln nachvermahlt, mit der Maßgabe, daß bei jedem Mahlvorgang eine Mahlbeschleunigung von 30 bis 80, insbesondere von 45 bis 55 m. $sec^{-2}$ gegeben ist,

(2) einer Aluminiumalkyl-Komponente der Formel

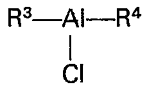

worin $R^3$ und $R^4$ gleich oder verschieden sind und stehen für eine 1 bis 8, insbesondere 2 bis 4 Kohlenstoffatome aufweisende Alkylgruppe, sowie

(3)—gegebenenfalls und vorteilhafterweise—einem phenolischen Stoff der Formel

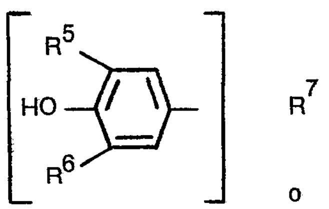

oder

(I)

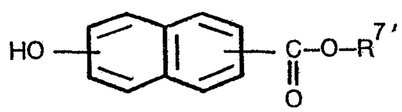

(II)

worin stehen

$R^5$ für eine $C_1$- bis $C_6$-, insbesondere $C_3$- bis $C_4$-Alkylgruppe,

$R^6$ für Wasserstoff oder eine $C_1$- bis $C_6$-, insbesondere $C_3$- bis $C_4$-Alkylgruppe,

$R^7$ für Wasserstoff oder einen nicht mehr als 30, insbesondere nicht mehr als 24 Kohlenstoffatome sowie—gegebenenfalls—bis zu insgesamt 6, insbesondere bis zu insgesamt 4 Äthergruppen und/oder Estergruppen aufweisenden gesättigten Kohlenwasserstoffrest,

$R^{7'}$ für eine $C_2$- bis $C_{24}$-, insbesondere $C_4$- bis $C_{18}$-Alkylgruppe, und

o für eine ganze Zahl von 1 bis 6, insbesondere 1 bis 4,

mit den Maßgaben, daß das Atomverhältnis Titan aus der Titan-III-Komponente (1): Aluminium aus der Aluminiumalkyl-Komponente (2) im Bereich von 1:1 bis 1:20, insbesondere 1:2 bis 1:15 liegt, und daß—im gegebenen Fall—das Molverhältnis Aluminiumalkyl-Komponente (2): phenolischer Stoff (3) 1:1 bis 40:1, insbesondere 3:1 bis 25:1 beträgt.

Das erfindungsgemäße Verfahren ist dadurch gekennzeichnet, daß eine Titan-III-Komponente (1) eingesetzt wird, die wie folgt erhalten wurde

(H) es wird eine Suspension hergestellt aus

($H_1$) 1 Gew.-Teil des gemäß (D), (E), (F) oder (G) erhaltenen Produkts,

($H_2$) 0,5 bis 20, insbesondere 0,7 bis 2 Gew.-Teilen eines unter Normalbedingungen flüssigen und unterhalb von 150, insbesondere unterhalb von 100°C siedenden Kohlenwasserstoffs (c), sowie

($H_3$) soviel Gew.-Teilen einer Sauerstoff enthaltenden Verbindung (d) wie einem Molverhältnis Titan aus der Titan enthaltenden Verbindung (a): Sauerstoff enthaltende Verbindung (d) von 1:0,01 bis 1:2, insbesondere 1:0,08 bis 1:0,5 entspricht, wobei diese Sauerstoff enthaltende Verbindung (d) besteht aus

($d_1$) einem Äther, der insgesamt 4 bis 30, insbesondere 6 bis 16 Kohlenstoffatome enthält und die Formel

$$R^8—O—R^{8'}$$

hat, worin $R^8$ und $R^{8'}$ gleich oder verschieden sind und stehen für (I) eine 1 bis 15, insbesondere 3 bis 8 Kohlenstoffatome aufweisende Alkylgruppe, (II) eine Phenylgruppe oder (III) eine insgesamt 7 bis 14, insbesondere 7 bis 10 Kohlenstoffatome aufweisende Alkylphenylgruppe, und/oder

($d_2$) einem Ester, der insgesamt 2 bis 34, insbesondere 2 bis 14 Kohlenstoffatome enthält und die Formel

$$R^{9\prime}—O—CO—R^9$$

bzw.

$$R^{9\prime}—O—CO—\underset{R^9}{C}=\underset{R^9}{CH}$$

hat, worin stehen

$R^9$ für (I) Wasserstoff, (II) eine 1 bis 12, insbesondere 1 bis 9 Kohlenstoffatome aufweisende Alkylgruppe, (III) eine insgesamt 7 bis 14, insbesondere 7 bis 10 Kohlenstoffatome aufweisende Phenylalkylgruppe, wobei 1 Wasserstoffatom des Phenylrests durch eine Alkylgruppe substituiert sein kann, (IV) eine Phenylgruppe oder (V) eine insgesamt 7 bis 14, insbesondere 7 bis 10 Kohlenstoffatome aufweisende Alkylphenylgruppe,

$R^{9\prime}$ für (I) eine 1 bis 8, insbesondere 1 bis 4 Kohlenstoffatome aufweisende Alkylgruppe, (II) eine Phenylgruppe oder (III) eine insgesamt 7 bis 14, insbesondere 7 bis 10 Kohlenstoffatome aufweisende Phenylalkylgruppe,

anschließend wird

(I) die gemäß (H) erhaltene Suspension unter heftiger Bewegung über eine Zeitspanne von 5 bis 120, insbesondere 15 bis 60 Minuten auf einer Temperatur von +40 bis +140, insbesondere +50 bis +95°C gehalten, dann auf eine Temperatur von +15 bis +25°C gebracht, hierauf wird

(J)—gegebenenfalls—aus der gemäß I erhaltenen Suspension der Feststoff abgetrennt, gewünschtenfalls mit einem unter Normalbedingungen flüssigen und unterhalb von 150, insbesondere unterhalb von 100°C siedenden Kohlenwasserstoff gewaschen sowie getrocknet:—

und derart eine gemäß I erhaltene, in suspendierter Form oder gemäß (J) erhaltene, in isolierter Form als Feststoff vorliegende Titan-III-Komponente (1) gewonnen.

Zu dem erfindungsgemäßen Verfahren ist im einzelnen das folgende zu bemerken:

Das Polymerisationsverfahren als solches kann—unter Beachtung der kennzeichnenden Besonderheit—in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, oder Trockenphasen-Polymerisationsverfahren. Die erwähnten technologischen Ausgestaltungen—mit anderen Worten: die technologischen Varianten der Polymerisation von $\alpha$-Monoolefinen nach Ziegler-Natta—sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Des weiteren ist noch festzuhalten, daß beim erfindungsgemäßen Verfahren die Komponenten des Katalysatorsystems in mannigfacher Weise in den Polymerisationsraum eingebracht werden können, z.B. (i) die Titan-Komponente (1), die Aluminiumalkyl-Komponente (2) sowie—gegebenenfalls—der phenolische Stoff (3) alle örtlich gemeinsam, (ii) die gleichen Komponenten alle örtlich getrennt voneinander, (iii) die Komponente (1) einerseits und ein Gemisch aus den Komponenten (2) und (3) andererseits örtlich getrennt voneinander—was insbesondere beim Trockenphasen-Polymerisationsverfahren von Vorteil sein kann—, oder (iiii) ein Gemisch aus den Komponenten (1) und (3) einerseits und die Komponente (2) andererseits örtlich getrennt voneinander.

Schließlich ist darauf hinzuweisen, daß die vorteilhaften Eigenschaften des erfindungsgemäßen Verfahrens im allgemeinen besonders dann in Erscheinung treten, wenn es als Trockenphasen-Polymerisationsverfahren durchgeführt wird (für dessen Ausgestaltungen typische Beispiele etwa mit den DE—B—12 17 071, 15 20 307 und 15 20 373 gegeben sind).

Was die stoffliche Seite des neuen Katalysatorsystems betrifft, ist im einzelnen das folgende zu sagen:

(1) Zur Titan-III-Komponente

Die als ein Ausgangsstoff für diese Komponente dienenden Titan enthaltenden Verbindungen (a) mit der angegebenen Formel sind die einschlägig üblichen, z.B. solche, wie sie durch Kokristallisation von $TiCl_3$ und $AlCl_3$ oder Reduktion von $TiCl_4$ mittels Aluminium bzw. Gemischen aus Aluminium und Titan erhalten werden können. Besonders gut geeignet sind Kokristallisate der Formel $TiCl_3 \cdot 1/3AlCl_3$. Die in Betracht kommenden Titan enthaltenden Verbindungen (a) sind im Handel erhältlich, so daß sich nähere Ausführungen erübrigen.

Als Ester (b) mit der angegebenen Formel kommen ebenfalls die einschlägig üblichen, dieser Formel gehorchenden in Betracht, insbesondere solche, in deren Formel stehen $R^1$ für eine Methyl-, Äthyl-, n-Propyl-, i-Propyl-, n-Butyl-, i-Butyl-, tert.-Butyl-, n-Pentyl-, i-Pentyl-, n-Hexyl- oder Benzyl-Gruppe, $R^2$ für Wasserstoff oder eine Methyl-, Äthyl-, n-Propyl-, i-Propyl-, n-Butyl-, i-Butyl-, tert.-Butyl-, n-Pentyl-, i-Pentyl-, n-Hexyl-, n-Heptyl-, n-Octyl-, Phenyl-, Benzyl-, 1-Phenyläthyl-, 2-Phenyläthyl-, 3-Phenylpropyl-, 4-Phenylbutyl- oder 5-Phenylpentyl-Gruppe.

Namentliche Beispiele für gut geeignete Ester (b) sind der Essigsäureäthylester, Essigsäurebutylester, Propionsäureäthylester, N-Buttersäureäthylester, n-Valeriansäureäthylester, Phenylessigsäureäthylester, 3-Phenylpropionsäureäthylester, 4-Phenylbuttersäureäthylester und Acrylsäurebutylester sowie Methacrylsäurebutylester.

Der gleichfalls zu verwendende flüssige Kohlenwasserstoff (c) dann ein Kohlenwasserstoff der Art sein, die üblicherweise mit Titan enthaltenden Komponenten für Katalysatoren des Ziegler-Natta-Typs ohne Schaden für den Katalysator bzw. dessen Titan enthaltende Komponente zusammengebracht werden;—z.B. bei der Polymerisation von $\alpha$-Monoolefinen. Als Beispiele für geeignete Kohlenwasserstoffe seien genannt: Pentane, Hexane, Heptane, Benzine und Cyclohexan.

Die weiterhin zum Herstellen der Titan-III-Komponente dienende Sauerstoff enthaltende Verbindung (d) kann ein Äther ($d_1$) mit der angegebenen Formel oder ein Ester ($d_2$) mit der angegebenen Formel sein.

Als Äther ($d_1$) kommen dabei wiederum die einschlägig üblichen, der angegebenen Formel gehorchenden in Betracht, insbesondere solche, in deren Formel $R^8$ bzw. $R^{8'}$ stehen für eine Methyl-, Äthyl-, Propyl-, Butyl-, Amyl-, Hexyl- oder Phenylgruppe. Geeignete Verbindungen dieser Art sind beispielsweise beschrieben in der US—A—3 116 274.

Namentliche Beispiele für gut geeignete Äther ($d_1$) sind der Di-n-propyl-, Di-n-butyl-, Di-isopentyl-, Di-n-amyl- und Di-n-hexyläther, der Methyl- und Äthylphenyläther, sowie vor allem der Di-n-Butyläther.

Als Ester ($d_2$) kommen ebenfalls die einschlägig üblichen, der angegebenen Formel gehorchenden in Betracht, insbesondere solche, in deren Formel stehen $R^9$ für Wasserstoff oder ein Methyl-, Äthyl-, n-Propyl-, n-Butyl-, n-Pentyl-, i-Pentyl-, n-Hexyl-, n-Heptyl-, n-Octyl-, n-Nonyl-, n-Decyl-, n-Undecyl-, n-Dodecyl-, Phenyl-, Benzyl-, 1-Phenyläthyl-, 2-Phenyläthyl-, 3-Phenylpropyl-, 4-Phenylbutyl- oder 5-Phenylpentyl-Gruppe, $R^{9'}$ für eine Methyl- Äthyl-, Propyl-, n-Butyl-, n-Pentyl-, i-Pentyl-, n-Hexyl- oder Benzyl-Gruppe.

Namentliche Beispiele für gut geeignete Ester ($d_2$) sind Capronsäureäthylester, Pelargonsäureäthylester, sowie Laurinsäureäthylester.

(2) Zur Aluminiumalkyl-Komponente

Als Aluminiumalkyl-Komponente mit der angegebenen Formel kommen wiederum die einschlägig üblichen, dieser Formel gehorchenden in Betracht; sie sind aus Literatur und Praxis so wohlbekannt, daß auf sie nicht näher eingegangen zu werden braucht. Als herausragender Vertreter sei beispielsweise genannt das Diäthylaluminiumchlorid.

(3) Zu den—vorteilhafterweise mitzuverwendenden—phenolischen Stoffen.

Typische Beispiele für gut geeignete Stoffe mit der angegebenen Formel (I) sind solche, in denen der Rest $R^5$ eine tert.-Butylgruppe, der Rest $R^6$ Wasserstoff oder eine tert.-Butylgruppe, der Rest $R^7$ Wasserstoff oder eine niedere Alkylgruppe, wie die Methyl-, Äthyl-, n-Propyl-, i-Propyl-, n-Butyl-, i-Butyl- oder tert.-Butylgruppe sind und o=1 ist. Hervorzuheben sind auch Stoffe, in denen die Reste $R^5$ und $R^6$ die gleichen Reste wie vorstehend sind und deren Rest $R^7$ sich symbolisieren läßt durch die Formeln

$$-C_pH_{2p}-\underset{\underset{O}{\|}}{C}-O-C_qH_{2q+1} \qquad \text{(mit o=1)}$$

oder

$$(-C_pH_{2p}-\underset{\underset{O}{\|}}{C}-O-CH_2-)_4C \qquad \text{(mit o=4)}$$

worin stehen

p für eine ganze Zahl von 0 bis 5, insbesondere 1 bis 4, und

q für eine ganze Zahl von 1 bis 24, insbesondere 1 bis 18,

und wobei die Gruppierungen $-C_pH_{2p}-$ sowie $-C_qH_{2q+1}$ vorzugsweise geradkettig sind.

Namentliche Beispiele für gut geeignete Stoffe mit der angegebenen Formel (I) sind 1-Oxy-2,6-di-tert.-butylbenzol, 4-Oxy-3,5-di-tert.-butyltoluol, der Ester der $\beta$-(4'-Oxy-3',5'-di-tert.-butylphenyl)-propionsäure mit Methanol, Äthanol, n-Propanol, n-Butanol, n-Octanol, n-Dodecanol bzw. n-Octadecanol und der Tetra-ester der vorgenannten Säure mit Pentaerythrit sowie ferner 1,3,5-Trimethyl-2,4,6-tris-(3,5-di-tert.-butyl-4-hydroxybenzyl)-benzol.

Typische Beispiele für gut geeignete Stoffe mit der angegebenen Formel (II) sind solche, die sich ableiten im Säureteil von der 2-Oxy-4-naphthoe-, 1-Oxy-2-naphthoe-, 2-Oxy-1-naphthoe- oder 1-Oxy-8-naphthoesäure und im Alkoholteil vom n-Octanol, n-Dodecanol oder n-Octadecanol.

Namentliche Beispiele für gut geeignete Stoffe mit der angegebenen Formel (II) sind der 2-Oxy-4-naphthoesäure-n-octadecylester, 1-Oxy-8-naphthoesäure-n-dodecylester, 1-Oxy-8-naphthoesäure-n-octadecylester, 1-Oxy-2-naphthoesäure-n-octylester und der 2-Oxy-1-naphthoesäure-n-octadecylester.

Das Herstellen der neuen Titan-III-Komponente ist einfach und für den Fachmann ohne nähere Erläuterungen möglich. Zu erwähnen ist lediglich das Folgende:

Die Maßnahme gemäß (E) sollte zweckmäßigerweise dann durchgeführt werden, wenn eine besonders enge Korngrößenverteilung gewünscht wird.

Das Durchführen der Maßnahme gemäß (F) bringt im allgemeinen den Effekt, daß—bei etwas verminderter Produktivität des Katalysatorsystems—ein ausgeprägt grobkörniges Polymerisat erhalten wird.

Die Maßnahme gemäß (G) wiederum sollte dann getroffen werden, wenn aus Stufe (F) ein agglomeriertes Produkt anfällt.

Beim Durchführen der Maßnahme gemäß (H), d.h. beim Herstellen der entsprechenden Suspension, hat sich gezeigt, daß es oft günstig ist, wenn man den Feststoff zunächst zusammenbringt mit einer relativ kleinen Menge des Kohlenwasserstoffs und dann die Gesamtmenge der Sauerstoff enthaltenden Verbindung mit der Restmenge des Kohlenwasserstoffs zufügt.

Im Zuge der Durchführung der Maßnahme gemäß (I) ist die Suspension heftig zu bewegen,—was am einfachsten durch Rühren erfolgen kann.

Das erfindungsgemäße Verfahren erlaubt es, Homo- und Copolymerisate von $C_2$- bis $C_6$-$\alpha$-Monoolefinen in vorteilhafter Weise herzustellen, wobei besonders geeignete zu polymerisierende $\alpha$-Monoolefine Propylen, Buten-1 und 4-Methylpenten-1, sowie—zur Copolymerisation—Äthylen sind.

Beispiel 1

Herstellung der Titan-III-Komponente (I)

Es wird so verfahren, daß man eine Titan enthaltende Verbindung (a) der Formel $TiCl_3 \cdot 0{,}33\ AlCl_3$ und als Ester (b) den Phenylessigsäureäthylester einer Mahlbehandlung unterzieht, derart, daß man

(A) als Arbeitsgerät eine Kugelschwingmühle wählt,

(B) die Mühle zunächst mit der Titan enthaltenden Verbindung (a) beschickt und bei einer Temperatur von +38°C über eine Zeitspanne von 18 Stunden in Abwesenheit von Verdünnungsmitteln betreibt, dann

(C) unter Mahlen bei einer Temperatur des Mahlgutes von —12°C die einem Molverhältnis Titan in der Titan enthaltenden Verbindung (a): Ester (b) von 1:0,3 entsprechende Menge des Esters (b) mit einer Geschwindigkeit von 12 ml/Min pro 2,5 kg Titan enthaltende Verbindung (a) kontinuierlich und in Abwesenheit von Verdünnungsmitteln zugibt, daraufhin

(D) unter Mahlen das Mahlgut über eine Zeitspanne von 44 Stunden auf einer Temperatur von +40°C hält, hierauf

(E) das gemäß (D) erhaltene Produkt über eine Zeitspanne von 15 Minuten bei einer Temperatur von —20°C in Abwesenheit von Verdünnungsmitteln weitervermahlt, und sodann

(F) das gemäß (E) erhaltene Produkt ohne es zu mahlen über eine Zeitspanne von 140 Std. auf einer Temperatur von +45°C hält,

(G)—entfällt—mit der Maßgabe, daß bei jedem Mahlvorgang eine Mahlbeschleunigung von 46 m. $sec^{-2}$ gegeben ist.

Erfindungsgemäß verfährt man im Weiteren so, daß man zusätzlich

(H) eine Suspension herstellt aus

($H_1$) 1 Gew.-Teil des gemäß (F) erhaltenen Produkts,

($H_2$) 0,8 Gew.-Teilen n-Heptan als Kohlenwasserstoff (c), sowie

($H_3$) soviel Gew.-Teilen Di-iso-pentyläther als Sauerstoff enthaltender Verbindung (d), wie einem Molverhältnis Titan aus der Titan enthaltenden Verbindung (a): Sauerstoff enthaltende Verbindung (d) von 1:0,13 entspricht, anschließend

(I) die gemäß (H) erhaltene Suspension unter heftigem Rühren über eine Zeitspanne von 30 Minuten auf einer Temperatur von +70°C hält, dann auf eine Temperatur von +25°C bringt, hierauf

(J) aus der gemäß (I) erhaltenen Suspension den Feststoff abtrennt, mit n-Heptan wäscht sowie trocknet;—

und derart mit dem gemäß (J) erhaltenen, in isolierter Form vorliegenden Feststoff die Titan-III-Komponente (1) gewinnt.

Polymerisation mittels der Titan-III-Komponente (1)

1,0 g der Titan-III-Komponente (1) sowie 1,8 g Diäthylaluminiumchlorid (2)—was einem Atomverhältnis Titan aus der Titan-III-Komponente (1): Aluminium aus dem Diäthylaluminiumchlorid (2) von etwa 1:3,8 entspricht—werden in einen 2-1-Rührkolben gegeben, der mit 1,5 l trockenem Heptan beschickt ist. Sodann wird unter Rühren und bei den—jeweils durch Regelung konstant gehaltenen—Parametern: Propylendruck=1 bar, Temperatur=60°C, über eine Zeitspanne von 5 Stunden polymerisiert, wonach die Polymerisation durch Zugabe von 20 ml Methanol abgebrochen wird, Hierauf wird das Suspensionsmedium durch Destillation abgetrennt.

Daten zu dem dabei erhaltenen Polypropylen finden sich in der unten stehenden Tabelle.

Beispiel 2

Herstellung der Titan-III-Komponente (1)

Es wird so verfahren, daß man eine Titan enthaltende Verbindung (a) der Formel $TiCl_3 \cdot 0{,}33\ AlCl_3$ und als Ester (b) den Phenylessigsäureäthylester einer Mahlbehandlung unterzieht, derart, daß man

(A) als Arbeitsgerät eine Kugelschwingmühle wählt,

(B) die Mühle zunächst mit der Titan enthaltenden Verbindung (a) beschickt und bei einer Temperatur von +35°C über eine Zeitspanne von 15 Stunden in Abwesenheit von Verdünnungsmitteln betreibt, dann

(C) unter Mahlen bei einer Temperatur des Mahlgutes von —16°C die einem Molverhältnis Titan in der Titan enthaltenden Verbindung (a): Ester (b) von 1:0,3 entsprechende Menge des Esters (b) mit einer Geschwindigkeit von 15 ml/Min pro 2,5 kg Titan enthaltende Verbindung (a) kontinuierlich und in Abwesenheit von Verdünnungsmitteln zugibt, daraufhin

(D) unter Mahlen das Mahlgut über eine Zeitspanne von 64 Stunden auf einer Temperatur von +40°C hält, hierauf

(E) das gemäß (D) erhaltene Produkt über eine Zeitspanne von 10 Minuten bei einer Temperatur von —25°C in Abwesenheit von Verdünnungsmitteln weitervermahlt, und sodann

(F) das gemäß (E) erhaltene Produkt ohne es zu mahlen über eine Zeitspanne von 8 Stunden auf einer Temperatur von +90°C hält und dann etwas auflockert,

(G)—entfällt—mit der Maßgabe, daß bei jedem Mahlvorgang eine Mahlbeschleunigung von 48 m. $sec^{-2}$ gegeben ist,

Erfindungs verfährt man im Weiteren so, daß man zusätzlich

(H) eine Suspension herstellt aus

($H_1$) 1 Gew.-Teil des gemäß (F) erhaltenen Produkts,

($H_2$) 1,5 Gew.-Teilen n-Heptan als Kohlenwasserstoff (c), sowie

($H_3$) soviel Gew.-Teilen Laurinsäureäthylester als Sauerstoff enthaltender Verbindung (d), wie einem Molverhältnis Titan aus der Titan enthaltenden Verbindung (a): Sauerstoff enthaltende Verbindung (d) von 1:0,13 entspricht, anschließend

(I) die gemäß H erhaltene Suspension unter heftigem Rühren über eine Zeitspanne von 30 Minuten auf einer Temperatur von +90°C hält, dann auf eine Temperatur von +20°C bringt, hierauf

(J) aus der gemäß (I) erhaltenen Suspension den Feststoff abtrennt, mit n-Heptan wäscht sowie trocknet;—

und derart mit dem gemäß (J) erhaltenen, in isolierter Form vorliegenden Feststoff die Titan-III-Komponente (1) gewinnt.

Polymerisation mittels der Titan-III-Komponente (1)

Sie erfolgt wie in Beispiel 1, zu den Daten des nunmehr erhaltenen Polypropylens siehe ebenfalls die nachstehende Tabelle.

Beispiel 3

Herstellung der Titan-III-Komponente (1)

Sie erfolgt in gleicher Weise wie in Beispiel 1, jedoch wird als Sauerstoff enthaltende Verbindung (d) anstelle des Di-iso-pentyläthers die äquimolekulare Menge an Di-n-butyläther eingesetzt.

Polymerisation mittels der Titan-III-Komponente (1)

Es werden unter Ausschluß von Luft und Feuchtigkeit in ein druckfestes Rührgefäß eingebracht 8 kg flüssiges Propylen, 18 Nl Wasserstoff (als Molekulargewichtsregler), 2,16 g Diäthylaluminiumchlorid (2), eine solche Menge (0,7 g) der Titan-III-Komponente (1), daß das Atomverhältnis Titan aus dieser Komponente (1): Aluminium aus dem Diäthylaluminiumchlorid (2) 1:6,5 beträgt; sowie eine solche Menge (0,53 g) n-Octadecyl-β-(4'-oxy-3',5'-di-tert.-butylphenyl)propionat (3), daß das Molverhältnis Diäthylaluminiumchlorid (2): phenolischem Stoff (3) 18:1 beträgt.

Die eigentliche Polymerisation wird mit Propylen bei einer Temperatur von 70°C unter einem Druck des Monomeren von 32 bar über 2 Stunden unter Rühren durchgeführt, worauf die Polymerisation durch Entspannen abgebrochen und das gebildete Polypropylen in üblicher Weise isoliert wird; seine Daten sind in der Tabelle angegeben.

Beispiel 4

Herstellung der Titan-III-Komponente (1)

Sie erfolgt in gleicher Weise wie in Beispiel 2, jedoch wird als Sauerstoff enthaltende Verbindung (d) anstelle des Laurinsäureäthylesters die äquimolekulare Menge Pelargonsäureäthylester eingesetzt.

Polymerisation mittels der Titan enthaltenden Komponente

Es wird gearbeitet mit einem Rühr-Reaktor von 0,8 $m^3$ Inhalt unter einem—durch Regelung dauernd aufrecht erhaltenen—Propylendruck von 29 bar sowie einer Wasserstoffmenge von 75 Nl/h bei einer—durch Regelung dauernd konstant gehaltenen—Reaktionstemperatur von 72°C und in Abwesenheit von Lösungs- bzw. Verdünnungsmitteln in einem Bett von 250 kg kleinteiligem Propylen-Polymerisat. Der Reaktor wird kontinuierlich betrieben, derart, daß—jeweils getrennt voneinandereingebracht werden 16,5 g/h der Titan-III-Komponente (1), 53,3 g/h Diäthylaluminiumchlorid (2) sowie 16,5 g/h des gleichen phenolischen Stoffes (3) wie in Beispiel 3. Damit beträgt das Atomverhältnis

Titan aus der Titan-III-Komponente (1): Aluminium aus dem Diäthylaluminiumchlorid (2) etwa 1:7 und das Molverhältnis Diäthylaluminiumchlorid (2): phenolischem Stoff (3) etwa 14:1.

Der Ausstoß des Reaktors ist ein kleinteiliges Polypropylen, dessen Daten sich ebenfalls in der nachstehenden Tabelle finden.

In der Tabelle bedeuten:

| | |
|---|---|
| Spez. Ausb. | =Gewichtsteile an Polymerisat, die pro Gewichtsteil der Titan-III-Komponente—gerechnet als Titan—erhalten werden. |
| HL; % | =In siedendem n-Heptan löslicher Anteil des Polymerisats in %. |
| XL; % | =In siedendem Xylol löslicher Anteil des Polymerisats in %. |
| xyz; % | =Prozentualer Anteil des Polymerisats mit einem Teilchendurchmesser von unter xyz $\mu$m. |
| [$\mu$] | =Intrinsic-Viskosität in dl/g. |
| ./. | =nicht ermittelt |

TABELLE

| Beispiel | Spez. Ausb. | HL; % | XL; % | <100; % | <250; % | <500; % | [$\mu$] |
|---|---|---|---|---|---|---|---|
| 1 | 680 | ./. | ./. | 0,4 | 2,5 | 10 | ./. |
| 2 | 603 | ./. | ./. | 0,6 | 3,7 | 12,4 | ./. |
| 3 | 19.800 | 3,4 | ./. | ./. | ./. | 4,0 | 2,5 |
| 4 | 22.200 | 2,1 | 2,1 | ./. | 7,5 | ./. | 2,5 |

**Patentanspruch**

Verfahren zum Herstellen von Homo- und Copolymerisaten von $C_2$- bis $C_6$-$\alpha$-Monoolefinen bei Temperaturen von 20 bis 160°C und Drücken von 1 bis 100 bar mittels eines Ziegler-Natta-Katalysatorsystems aus

(1) einer Titan-III-Komponente, bei deren Herstellung man

(1.1) eine Titan enthaltende Verbindung (a) der Formel

$$TiCl_3 \cdot nAlCl_3,$$

worin n für eine Zahl im Bereich von 0,01 bis 1 steht, und

(1.2) einen Ester (b) der insgesamt 2 bis 34 Kohlenstoffatome enthält und die Formel

$$R^1—O—CO—R^2$$

oder

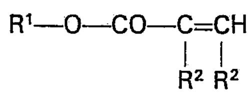

hat worin stehen

$R^1$ für (I) eine 1 bis 16 Kohlenstoffatome aufweisende Alkylgruppe oder (II) eine insgesamt 7 bis 23 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können,

$R^2$ für (I) Wasserstoff, (II) eine 1 bis 18 Kohlenstoffatome aufweisende Alkylgruppe (III) eine insgesamt 7 bis 23 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können, (IV) eine Phenylgruppe oder (V) eine insgesamt 7 bis 23 Kohlenstoffatome aufweisende Alkylphenylgruppe, wobei bis zu 5 Wasserstoffatome des Phenylrests durch 1 bis 4 Kohlenstoffatome aufweisende Alkylgruppen substituiert sein können.

einer Mahlbehandlung unterzieht, derart, daß man

(A) als Arbeitsgerät eine Kugelschwingmühle wählt,

(B) die Mühle zunächst mit der Titan enthaltenden Verbindung (a) beschickt und—gegebenenfalls—bei einer Temperatur von —50 bis +100°C über eine Zeitspanne von 0,5 bis 100 Stunden in Abwesenheit von Verdünnungsmitteln betreibt, dann

(C) unter Mahlen bei einer Temperatur des Mahlgutes von —50 bis +80°C die einem Molverhältnis Titan in der Titan enthaltenden Verbindung (a); Ester (b) von 1:1,5 bis 1:0,01 entsprechende

Menge des Esters (b) mit einer Geschwindigkeit von 0,01 bis 200 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 120 Stunden auf einer Temperatur von +15 bis +100°C hält, hierauf

(E) —gegebenenfalls—das gemäß (D) erhaltene Produkt über eine Zeitspanne von 0,5 bis 60 Minuten bei einer Temperatur von −50 bis +5°C in Abwesenheit von Verdünnungsmitteln weitervermahlt, sodann

(F) —gegebenenfalls und vorteilhafterweise—das gemäß (D) oder (E) erhaltene Produkt ohne es zu mahlen über eine Zeitspanne von 0,25 bis 300 Stunden auf einer Temperatur von +20 bis +150°C hält, und danach

(G) —gegebenenfalls—daß gemäß (F) erhaltene Produkt über eine Zeitspanne von 0,5 bis 60 Minuten bei einer Temperatur von −50 bis +5°C in Abwesenheit von Verdünnungsmitteln nachvermahlt, mit der Maßgabe, daß bei jedem Mahlvorgang eine Mahlbeschleunigung von 30 bis 80 m. $sec^{-2}$ gegeben ist,

(2) einer Aluminiumalkyl-Komponente der Formel

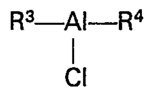

worin $R^3$ und $R^4$ gleich oder verschieden sind und stehen für eine 1 bis 8 Kohlenstoffatome aufweisende Alkylgruppe, sowie

(3) —gegebenenfalls—einem phenolischen Stoff der Formel

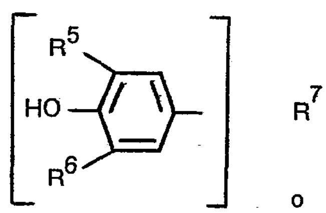

oder

(I)

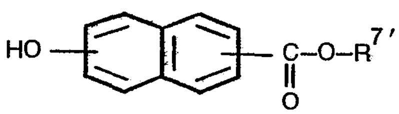

(II)

worin stehen

- $R^5$ für eine $C_1$- bis $C_6$-Alkylgruppe,
- $R^6$ für Wasserstoff oder eine $C_1$- bis $C_6$-Alkylgruppe,
- $R^7$ für Wasserstoff oder einen nicht mehr als 30 Kohlenstoffatome sowie—gegebenenfalls—bis zu insgesamt 6 Äthergruppen und/oder Estergruppen aufweisenden gesättigten Kohlenwasserstoffrest,
- $R^{7'}$ für eine $C_2$- bis $C_{24}$-Alkylgruppe, und
- o für eine ganze Zahl von 1 bis 6,

mit den Maßgaben, daß das Atomverhältnis Titan aus der Titan-III-Komponente (1): Aluminium aus der Aluminiumalkyl-Komponente (2) im Bereich von 1:1 bis 1:20 liegt, und daß—im gegebenen Fall—das Molverhältnis Aluminiumalkyl-Komponente (2): phenolischer Stoff (3) 1:1 bis 40:1 beträgt, dadurch gekennzeichnet, daß eine Titan-III-Komponente (1) eingesetzt wird, die wie folgt erhalten wurde

(H) es wird eine Suspension hergestellt aus

($H_1$) 1 Gew.-Teil des gemäß (D), (E), (F) oder (G) erhaltenen Produkts,

($H_2$) 0,5 bis 20 Gew.-Teilen eines unter Normalbedingungen flüssigen und unterhalb von 150°C siedenden Kohlenwasserstoffs (c), sowie

($H_3$) soviel Gew.-Teilen einer Sauerstoff enthaltenden Verbindung (d) wie einem Molverhältnis Titan aus der Titan enthaltenden Verbindung (a): Sauerstoff enthaltende Verbindung (d) von 1:0,01 bis 1:2 entspricht, wobei diese Sauerstoff enthaltende Verbindung (d) besteht aus

($d_1$) einem Äther, der insgesamt 4 bis 30 Kohlenstoffatome enthält und die Formel

$$R^8—O—R^{8'}$$

hat, worin $R^8$ und $R^{8'}$ gleich oder verschieden sind und stehen für (I) eine 1 bis 15 Kohlenstoffatome aufweisende Alkylgruppe, (II) eine Phenylgruppe oder (III) eine insgesamt 7 bis 14 Kohlenstoffatome aufweisende Alkylphenylgruppe, und/oder

($d_2$) einem Ester, der insgesamt 2 bis 34 Kohlenstoffatome enthält und die Formel

$$R^{9'}—O—CO—R^9$$

bzw.

$$R^{9'}—O—CO—\underset{R^9}{\underset{|}{C}}=\underset{R^9}{\underset{|}{CH}}$$

hat, worin stehen

$R^9$ für (I) Wasserstoff (II) eine 1 bis 12 Kohlenstoffatome aufweisende Alkylgruppe, (III) eine insgesamt 7 bis 14 Kohlenstoffatome aufweisende Phenylalkylgruppe, wobei 1 Wasserstoffatom des Phenylrests durch eine Alkylgruppe substituiert sein kann, (IV) eine Phenylgruppe oder (V) eine insgesamt 7 bis 14 Kohlenstoffatome aufweisende Alkylphenylgruppe,

$R^{9'}$ für (I) eine 1 bis 8 Kohlenstoffatome aufweisende Alkylgruppe, (II) eine Phenylgruppe oder (III) eine insgesamt 7 bis 14 Kohlenstoffatome aufweisende Phenylalkylgruppe,

anschließend wird

(I) die gemäß (H) erhaltene Suspension unter heftiger Bewegung über eine Zeitspanne von 5 bis 120 Minuten auf einer Temperatur von +40 bis +140°C gehalten, dann auf eine Temperatur von +15 bis +25°C gebracht, hierauf wird

(J) —gegebenenfalls—aus der gemäß (I) erhaltenen Suspension der Feststoff abgetrennt, gewünschtenfalls mit einem unter Normalbedingungen flüssigen und unterhalb von 150°C siedenden Kohlenwasserstoff gewaschen, sowie getrocknet;—

und derart eine gemäß (I) erhaltene, in suspendierter Form oder gemäß (J) erhaltene, in isolierter Form als Feststoff vorliegende Titan-III-Komponente (1) gewonnen.

**Revendication**

Procédé pour la préparation de produits d'homo- et de copolymérisation d'$\alpha$-monooléfines en $C_2$ à $C_6$ à des températures de 20 à 160°C et sous des pressions de 1 à 100 bar au moyen d'un système catalyseur de Ziegler-Natta formé de:

(1) un composant de titane trivalent, pour la préparation duquel on soumet

(1.1) un composé (a) contenant du titane, de formule

$$TiCl_3 \cdot nAlCl_3$$

dans laquelle n est mis pour un nombre dans la gamme de 0,01 à 1 et

(1.2) un ester (b) qui contient au total 2 à 34 atomes de carbone et répond à la formule

$$R^1—O—CO—R^2$$

ou

$$R^1—O—CO—\underset{R^2}{\underset{|}{C}}=\underset{R^2}{\underset{|}{CH}}$$

dans laquelle

$R^1$ est mis pour: (I) un groupe alcoyle comportant 1 à 16 atomes de carbone ou (II) un groupe phénylalcoyle comportant au total 7 à 23 atomes de carbone, jusqu'à 5 atomes d'hydrogène du radical phényle pouvant être substitués par des groupes alcoyle comportant 1 à 4 atomes de carbone,

$R^2$ est mist pour: (I) un hydrogène, (II) un groupe alcoyle comportant 1 à 18 atomes de carbone, (III) un groupe phénylalcoyle comportant au total 7 à 23 atomes de carbone, jusqu'à 5 atomes d'hydrogène du radical phényle pouvant être substitués par des groupes alcoyle comportant 1 à 4 atomes de carbone, (IV) un groupe phényle ou (V) un groupe alcoylphényle comportant 7 à 23 atomes de carbone au total, jusqu'à 5 atomes d'hydrogène du radical phényle pouvant être substitués par des groupes alcoyle comportant 1 à 4 atomes de carbone, à un traitement de broyage dans les conditions suivantes:

(A) on choisit, comme appareil de traitement, un broyeur à cuve vibrante et à boulets;

(B) on charge tout d'abord le broyeur avec le composé (a) contenant du titane et—le cas échéant—on le fait marcher à une température de —50 à +100°C pendant une période de 0,5 à 100 heures en l'absence de diluants; puis

(C) sous broyage à une température du produit broyé de −50 à +80°C, on ajoute une quantité de l'ester (b) correspondant à un rapport molaire du titane présent dans le composé (a) contenant du titane à l'ester (b) de 1:1,5 à 1:0,01, à une vitesse de 0,01 à 200 ml/mn pour 2,5 kg de composé (a) contenant du titane, de façon continue ou par petites portions et en l'absence de diluants; puis

(D) sous broyage, on maintient le produit broyé, pendant une période de 1 à 120 heures, à une température de +15 à +100°C; puis

(E) —le cas échéant—on broie de nouveau le produit obtenu en (D), pendant une période de 0,5 à 60 minutes, à une température de −50 à +5°C, en l'absence de diluants; puis

(F) —le cas échéant et de façon avantageuse—on maintient le produit obtenu en (D) ou en (E), sans le broyer, pendant une période de 0,25 à 300 heures, à une température de +20 à +150°C, et ensuite

(G) —le cas échéant—on broie encore le produit obtenu en (F) pendant une période de 0,5 à 60 minutes, à une température de −50 à +5°C en l'absence de diluants, l'accélération de broyage étant réglée à 30—80 m. $s^{-2}$ dans chaque opération de broyage,

(2) un composant d'aluminium-alcoyle de formule

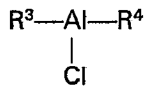

dans laquelle $R^3$ et $R^4$ sont semblables ou différents et sont mis pour un groupe alcoyle comportant 1 à 8 atomes de carbone, ainsi que

(3) —le cas échéant—une substance phénolique de formule

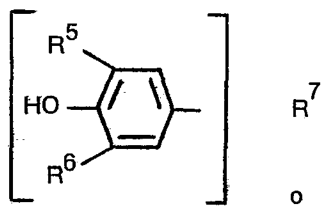
ou

(I)

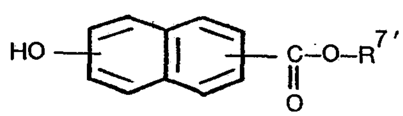

(II)

dans laquelle

- $R^5$ est mis pour un groupe alcoyle en $C_1$ à $C_6$,
- $R^6$ est mis pour un hydrogène ou un groupe alcoyle en $C_1$ à $C_6$,
- $R^7$ est mis pour un hydrogène ou un radical hydrocarboné saturé ne comportant pas plus de 30 atomes de carbone et contenant—le cas échéant—jusqu'à 6 groupes éther et/ou ester,
- $R^{7'}$ est mis pour un groupe alcoyle en $C_2$ à $C_{24}$, et
- o est mis pour un nombre entier de 1 à 6,

avec ces conditions que le rapport atomique du titane présent dans le composant de titane trivalent (1) à l'alumium présent dans le composant d'aluminium-alcoyle (2) se situe dans la gamme de 1:1 à 1:20 et que—le cas échéant—le rapport molaire du composant d'aluminium-alcoyle (2) à la substance phénolique (3) soit compris entre 1:1 et 40:1, caractérisé en ce qu'on utilise un composant de titane trivalent (1) qui a été obtenu de la manière suivante:

(H) on prépare une suspension de

($H_1$) 1 partie en poids du produit obtenu en (D), (E), (F) ou (G),

($H_2$) 0,5 à 20 parties en poids d'un hydrocarbure (c) liquide dans les conditions normales et bouillant au-dessous de 150°C et

($H_3$) autant de parties en poids d'un composé (d) contenant de l'oxygène pour que l'on obtienne un rapport molaire du titane présent dans le composé (a) contenant du titane au composé (d) contenant de l'oxygène de 1:0,01 à 1:2, ce composé (d) contenant de l'oxygène étant constitué par

($d_1$) un éther qui contient au total 4 à 30 atomes de carbone et qui répond à la formule

$$R^8—O—R^{8'}$$

dans laquelle $R^8$ et $R^{8'}$ sont semblables ou différents et sont mis pour: (I) un groupe alcoyle comportant 1 à 15 atomes de carbone, (II) un groupe phényle ou (III) un groupe alcoylphényle comportant au total 7 à 14 atomes de carbone, et/ou

($d_2$) un ester qui contient au total 2 à 34 atomes de carbone et qui répond à la formule

$$R^{9'}\text{—O—CO—}R^9$$

ou

$$R^{9'}\text{—O—CO—}\underset{R^9}{\underset{|}{C}}=\underset{R^9}{\underset{|}{CH}}$$

dans laquelle

- $R^9$ est mis pour: (I) un hydrogène, (II) un groupe alcoyle comportant 1 à 12 atomes de carbone, (III) un groupe phénylalcoyle comportant au total 7 à 14 atomes de carbone, 1 atome d'hydrogène du radical phényle pouvant être substitué par un groupe alcoyle, (IV) un groupe phényle ou (V) un groupe alcoylphényle comportant au total 7 à 14 atomes de carbone,
- $R^{9'}$ est mis pour: (I) un groupe alcoyle comportant 1 à 8 atomes de carbone, (II) un groupe phényle ou (III) un groupe phénylalcoyle comportant au total 7 à 14 atomes de carbone; après quoi:

(I) sous agitation vigoureuse, on porte la suspension obtenue en (H), en une période de 5 à 120 minutes, à une température de +40 à +140°C, puis on la ramène à une température de +15 à +25°C et

(J) —le cas échéant—la matière solide est séparée de la suspension obtenue en (I), lavée si on le désire avec un hydrocarbure liquide dans les conditions normales et bouillant au-dessous de 150°C, et séchée;

et on dispose de la sorte d'un composant de titane trivalent (1) qui se présente sous forme de suspension lorsqu'il est obtenu suivant (I) et sous forme isolée comme matière solide lorsqu'il est obtenu suivant (J).

**Claim**

A process for the preparation of homopolymers and copolymers of $C_2$—$C_6$-$\alpha$-monoolefins at from 20 to 160°C, under a pressure of from 1 to 100 bar, by means of a Ziegler-Natta catalyst system comprising

(1) a titanium-III component, in the preparation of which

(1.1) a titanium-containing compound (a) of the formula

$$TiCl_3 \cdot nAlCl_3$$

where n is a number from 0.01 to 1, and

(1.2) an ester (b), which contains a total of 2 to 34 carbon atoms, and has the formula

$$R^1\text{—O—CO—}R^2$$

or

$$R^1\text{—O—CO—}\underset{R^2}{\underset{|}{C}}=\underset{R^2}{\underset{|}{CH}}$$

where

- $R^1$ is (I) alkyl of 1 to 16 carbon atoms, or (II) phenylalkyl of a total of 7 to 23 carbon atoms, in which up to 5 hydrogens of the phenyl may be substituted by alkyl of 1 to 4 carbon atoms, and
- $R^2$ is (I) hydrogen, (II) alkyl of 1 to 18 carbon atoms, (III) phenylalkyl of a total of 7 to 23 carbon atoms, in which up to 5 hydrogens of the phenyl may be substituted by alkyl of 1 to 4 carbon atoms, (IV) phenyl or (V) alkylphenyl of a total of 7 to 23 carbon atoms, in which up to 5 hydrogens of the phenyl may be substituted by alkyl of 1 to 4 carbon atoms, are subjected to a milling treatment in which

(A) a vibratory ball mill is used,

(B) the mill is first charged with the titanium-containing compound (a) and, if desired, is run at from —50 to +100°C for a period of from 0.5 to 100 hours, in the absence of a diluent, then

(C) whilst milling the charge at from —50 to +80°C the amount of the ester (b) which corresponds to a molar ratio of titanium in the titanium-containing compound (a) to ester (b) of from 1:1.5 to 1:0.01 is added continuously, or a little at a time, in the absence of a diluent, at a rate of from 0.01 to 200 ml/min per 2.5 kg of titanium-containing compound (a), thereupon

(D) the charge is milled for a period of from 1 to 120 hours at from +15 to +100°C, hereupon

(E) if desired, the product obtained according to (D) is milled further for a period of from 0.5 to 60 minutes at from −50 to +5°C in the absence of a diluent, then

(F) if desired, but advantageously, the product obtained according to (D) or (E) is kept, without milling, at from +20 to +150°C for a period of from 0.25 to 300 hours, and thereafter

(G) if desired, the product obtained according to (F) is milled further, in the absence of a diluent, for a period of from 0.5 to 60 minutes at from −50 to +5°C, with the proviso that each milling operation is carried out with a milling acceleration of from 30 to 80 m. $sec^{-2}$,

(2) an aluminium-alkyl component of the formula

$$R^3—Al—R^4$$
$$|$$
$$Cl$$

where $R^3$ and $R^4$ are identical or different and each is alkyl of 1 to 8 carbon atoms, and

(3) if desired, a phenolic compound of the formula

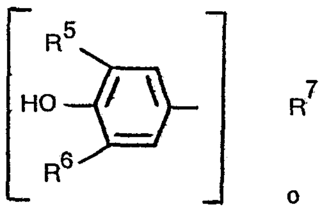

or

(I)

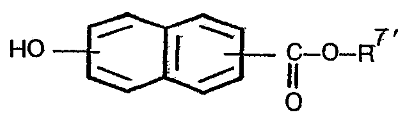

(II)

where

$R^5$ is $C_1$—$C_6$-alkyl,

$R^6$ is hydrogen or $C_1$—$C_6$-alkyl,

$R^7$ is hydrogen or a saturated hydrocarbon radical of not more than 30 carbon atoms, which may or may not contain up to 6 ether groups and/or ester groups,

$R^{7'}$ is $C_2$—$C_{24}$-alkyl and

o is an integer from 1 to 6,

with the proviso that the atomic ratio of titanium from the titanium-III component (1) to aluminum from the aluminum-alkyl component (2) is from 1:1 to 1:20, and that, where relevant, the molar ratio of aluminum-alkyl component (2) to phenolic compound (3) is from 1:1 to 40:1, wherein a titanium-III component (1) is employed which has been prepared in the following manner:

(H) a suspension is prepared from

($H_1$) 1 part by weight of the product obtained according to (D), (E), (F) or (G),

($H_2$) from 0.5 to 20 parts by weight of a hydrocarbon (c) which is liquid under standard conditions and boils below 150°C, and

($H_3$) so many parts by weight of an oxygen-containing compound (d) that the molar ratio of titanium from the titanium-containing compound (a) to oxygen-containing compound (d) is from 1:0.01 to 1:2, this oxygen-containing compound consisting of

($d_1$) an ether which contains a total of 4 to 30 carbon atoms, and has the formula

$$R^8—O—R^{8'}$$

where $R^8$ and $R^{8'}$ may be identical or different and each is (I) alkyl of 1 to 15 carbon atoms, (II) phenyl or (III) alkylphenyl of a total of 7 to 14 carbon atoms, and/or

($d_2$) an ester which contains a total of 2 to 34 carbon atoms, and has the formula

$$R^{9'}—O—CO—R^9$$

or

$$R^{9'}—O—CO—C=CH$$
$$|\quad|$$
$$R^9\ R^9$$

where

$R^9$ is (I) hydrogen, (II) alkyl of 1 to 12 carbon atoms, (III) phenylalkyl of a total of 7 to 14 carbon atoms, in which 1 hydrogen of the phenyl may be substituted by alkyl, (IV) phenyl or (V) alkylphenyl of a total of 7 to 14 carbon atoms, and

$R^{9\prime}$ is (I) alkyl of 1 to 8 carbon atoms (II) phenyl or (III) phenylalkyl of a total of 7 to 14 carbon atoms, thereafter

(I) the suspension obtained according to (H) is kept at from +40 to +140°C for from 5 to 120 minutes, with vigorous agitation, and is then brought to from +15 to +25°C, and hereupon

(J), if desired, the solid is isolated from the suspension obtained according to (I), optionally washed with a hydrocarbon which is liquid under standard conditions and boils below 150°C, and is dried,

the novel titanium-III component (1) being the solid, in suspended form, obtained according to (I) or the solid, in isolated form, obtained according to (J).